# EUROPÄISCHE PATENTSCHRIFT

(11) **EP 1 125 246 B1**
(45) Veröffentlichungstag und Bekanntmachung des Hinweises auf die Patenterteilung: **07.01.2004**
(21) Anmeldenummer: 99950686.8
(22) Anmeldetag: 09.10.1999
(51) Int. Cl.: G06K 11/20

(54) **BEDIENEINHEIT MIT EINER MAUS FÜR EINEN COMPUTER**
OPERATOR'S COMMUNICATION UNIT WITH A MOUSE FOR A COMPUTER
UNITE DE COMMANDE POURVUE D'UNE SOURIS POUR UN ORDINATEUR

(30) Priorität: 30.10.1998 DE 19850305
(43) Veröffentlichungstag der Anmeldung: 22.08.2001
(73) Patentinhaber: Rittal-Werk Rudolf Loh GmbH & Co. KG, 35745 Herborn (DE)
(72) Erfinder: SCHMITT, Heinz, D-35716 Dietzhölztal (DE); LOTZ, Reimund, D-35685 Dillenburg (DE); WALBERDORF, Holger, D-35716 Dietzhölztal (DE); ELM, Oskar, D-35716 Dietzhölztal (DE)
(74) Vertreter: Fleck, Hermann-Josef, Dr.-Ing.
(86) Internationale Anmeldenummer: PCT/EP1999/007585
(87) Internationale Veröffentlichungsnummer: WO 2000/026854

(56) Entgegenhaltungen:
- WO-A-97/44901
- DE-A- 19 652 491
- DE-U- 29 804 165

## Beschreibung

Die Erfindung bezieht sich auf eine Bedieneinheit mit einer Maus und einem Tableau und mit einer Kabelanordnung zum Anschluss an einem Bedieneinheit-Eingang eines Computers nach dem Oberbegriff des Anspruchs 1 bzw. 2.

In der WO 97/44901 ist eine Bedieneinheit mit einem Tableau und einer Maus angegeben, wobei Tableau und Maus aber nicht in elektrischer Wirkverbindung stehen, sondern das Tableau unabhängig von der Maus-Eingabefunktion eine Eingabefunktion mit von Hand betätigbaren kapazitiven Berührungsfeldern aufweist. Bei einem Ausführungsbeispiel stehen das Tableau und die Maus über eine gemeinsame drahtlose Übertragungseinheit mit dem Computer in Verbindung.

Eine Bedieneinheit mit elektrischer Wirkverbindung zwischen Maus und Tableau ist in der DE 196 37 487 A1 als bekannt ausgewiesen. Die Maus erzeugt dabei in Verbindung mit einem in einem Tableau gebildeten mehrphasigen elektrischen Wanderfeld Positionssignale, die von dem Computer zur Steuerung der Anzeige und weiterer Funktionen verarbeitet werden. Eine derartige Maus eignet sich insbesondere für einen industriellen Einsatz, da für die Signalerzeugung keine mechanisch bewegten Teile innerhalb der Maus, wie z.B. eine rollende Kugel, erforderlich sind.

Bei einer in der DE 196 52 491 A angegebenen ähnlichen Bedieneinheit für einen Computer ist sowohl in der Maus als auch in dem Tableau, über das sie geführt wird, eine Spule vorhanden, und die Maus erhält ihre Betriebsspannung durch Induktion mittels des in dem Tableau ständig erzeugten elektromagnetischen Wechselfelds. Die Bewegung der Maus wird auch hierbei aus Modulationssignalen detektiert.

Auch in DE 298 04 165 U ist eine Bedieneinheit gezeigt, die verschiedene Einheiten, wie z.B. Maus und Tableau, aufweist.

Die Einheiten sind elektrisch in Form einer Daisy-Chain seriell miteinander verbunden, und Können mittels Schnittstelle an einen übergeordneten Computer angeschlossen werden.

Der Erfindung liegt die Aufgabe zugrunde, eine Bedieneinheit der eingangs angegebenen Art bereitzustellen, die eine hohe Betriebssicherheit bietet und von einem Benutzer einfach angeschlossen werden kann.

Diese Aufgabe wird mit den Merkmalen der Ansprüche 1 und 2 gelöst. Auf diese Weise sind die Maus und das Tableau eindeutig untereinander verbunden und auch eindeutig mit dem Computer verbindbar, wobei die verschiedenen Kabel eindeutig einander zugeordnet und auch eine sichere Spannungsversorgung für eine zuverlässige Funktion gewährleistet sind. Die Anbindung des Tableaus mit nur einem Kabel sowohl für die Spannungsversorgung als auch für die elektrischen Signale begünstigt dabei zudem eine für den tndusirieeinsatz vorteilhafte einfache zuverlässige Abdichtung.

Die Spannungsversorgung kann bei ausreichend hoher Versorgungsleistung, wie z.B. bei einem PS/2-Port, vom Bedieneinheit-Eingang des Computers her erfolgen, so dass kein zusätzliches Versorgungskabel vorgesehen zu werden braucht. Bietet der Bedieneinheit-Eingang keine genügende Leistung für die Spannungsversorgung, so kann über das zusätzliche Versorgungskabel die Versorgung auf einfache Weise vom Tastatureingang des Computers her erfolgen, der eine genügende Leistung bereitstellt.

Durch die Maßnahme, dass das Maus-Kabel mittels einer Stecker/Kupplungs-Einheit in zwei trennbare Abschnitte unterteilt ist, ist das Tableau nur mit den Kabeln und Anschlußelementen fest verbunden, und der Anschluß der Bedieneinheit kann leicht durch den Anschluß der Maus vervollständigt werden. Umgekehrt kann sich auch die Entfernung der Bedieneinheit von dem Computer vereinfachen.

Die Abdichtung der Bedieneinheit wird dadurch begünstigt, dass das Tableau-Kabel über eine Kabeldurchführung gedichtet in das Tableaugehäuse eingeführt und im Innern des Tableaugehäuses angeschlossen ist.

Eine einfache, gut zu bedienende Anordnung ergibt sich dabei dadurch, dass das Anschlußelement, der an dieses anschließende Abschnitt des Maus-Kabels mit dem zugehörigen Teil der Stecker/Kupplungs-Einheit, das Tableau-Kabel, das Tableau, das Versorgungskabel und der Kabelabschnitt mit dem Stecker und der Kupplung eine fest miteinander verbundene Einheit bilden. Der Bediener muss dabei nur wenige Verbindungen selbst herstellen, die andererseits aber leicht vorgenommen werden können.

Eine einfache Ankopplung des Versorgungskabels wird dadurch erzielt, dass das Versorgungskabel mit einem Zwischenstück zwischen dem Tastatureingang des Computers und einem Anschlußstück eines Anschlußkabels der Tastatur verbunden ist und dass das Zwischenstück einen Kabelabschnitt aufweist, der auf seiner einen Seite mit einem Stecker und auf seiner anderen Seite mit einer Kupplung versehen ist, oder als eine Stecker/Kupplungs-Gehäuseeinheit ausgebildet ist, in der eine Kabelanschlußstelle für das Versorgungskabel vorgesehen ist. Dabei ist auch die Tastatur einfach verbindbar.

Der Aufbau wird weiterhin dadurch begünstigt, dass das Anschlußelement bei direkter Verbindbarkeit mit dem Computer eine Trapez-Buchse oder ein Trapezstecker ist, da insbesondere der Trapezstecker ausreichenden Platz für die Zusammenführung mehrerer Kabel bietet.

Die Erfindung wird nachfolgend anhand von Ausführungsbeispielen unter Bezugnahme auf die Zeichnungen näher erläutert. Es zeigen:
- Fig. 1: eine an einem Computer anzuschließende Bedieneinheit mit einem ersten Ausführungsbeispiel einer Kabelanordnung und
- Fig.2: eine Bedieneinheit mit einem weiteren Ausführungsbeispiel für die Kabelanordnung.

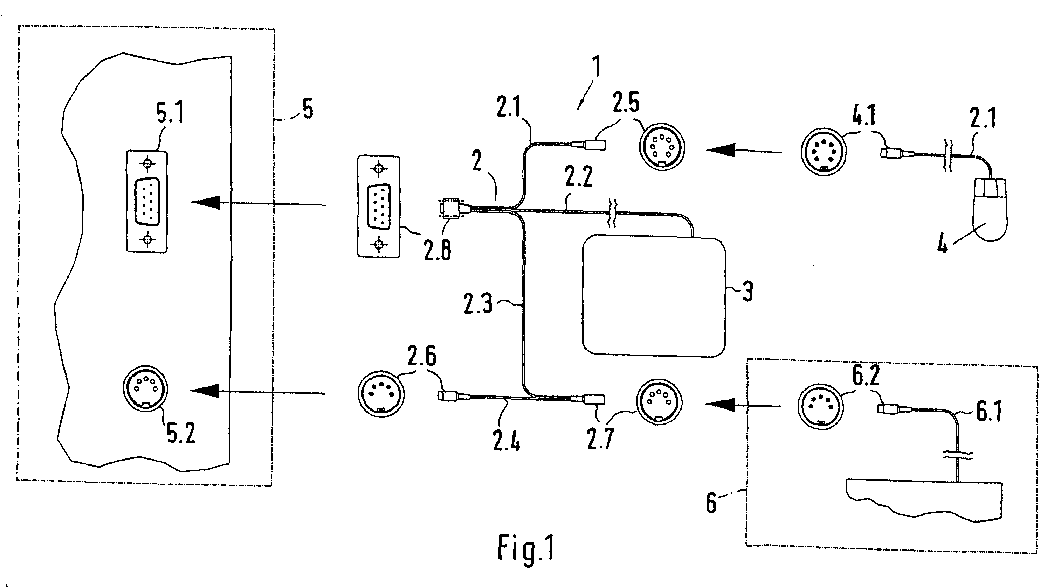

Fig. 1 zeigt eine Bedieneinheit 1 mit einer Maus 4 und einem Tableau 3, die über eine Kabelanordnung 2 mit einem Bedieneinheit-Eingang 5.1 eines Computers 5 verbindbar sind. In dem Gehäuse des Tableaus 3 wird ein mehrphasiges elektrisches Wanderfeld erzeugt, das mittels einer Empfangsspule in der Maus abgetastet wird, wenn die Maus 4 über das Tableau 3 bewegt wird. Die Bewegung der Maus kann durch Verarbeitung der elektrischen Signale des Tableaus 3 und der Maus 4 ausgewertet werden, wie z.B. in dem eingangs angegebenen Stand der Technik näher ausgeführt ist.

In einem gemeinsamen Anschlusselement 2.8 in Form einer trapezförmigen Bedieneinheit-Buchse 2.8 sind ein Versorgungskabel 2.3, ein Tableau-Kabel 2.2 sowie ein Maus-Kabel 2.1 zusammengeführt und verbunden. Die trapezförmige Bedieneinheit-Buchse 2.8 kann auf einen entsprechenden trapezförmigen Stecker des Bedieneinheit-Eingangs 5.1 aufgesteckt werden, so dass die Maus 4 und das Tableau 3 gleichzeitig mit dem Bedieneinheit-Eingang 5.1 verbunden sind. Das Versorgungskabel 2.3 ist weiterhin mit einer Zwischenbuchse 2.7 verbunden, an der auch ein Kabelabschnitt 2.4 angebracht ist, der auf seiner dem Computer 5 zugekehrten Seite einen Tastaturstecker 2.5 trägt, um einen Anschluss an einem Tastatureingang 5.2 des Computers 5 herzustellen. Die Zwischenbuchse 2.7 dient zum Anschluss einer Tastatur 6 mit einem Anschlusskabel 6.1 und einem Anschluss-stecker 6.2. Das Maus-Kabel 2.1 ist aus zwei Abschnitten gebildet, die mit einer Maus-Buchse 2.5 und einem Maus-Stecker 4.1 ineinander steckbar sind. Das Tableau-Kabel 2.2 ist abgedichtet in das Tableaugehäuse geführt und darin mit einer Steuerplatine verbunden.

Das Tableau 3 ist über eine von dem Tastatureingang 5.2 abgenommene und über den Kabelabschnitt 2.4, das Versorgungskabel 2.3 und das Tableau-Kabel 2.2 geführte Spannung mit der erforderlichen Versorgungsspannung versorgbar. Der Tastatureingang 5.2 stellt dabei eine genügend stabile Spannung zur Verfügung.

Anstelle des Kabelabschnitts 2.4 mit dem Tastaturstecker 2.6 und der Zwischenbuchse 2.7 kann auch eine Stecker/Kupplungs-Gehäuseeinheit vorgesehen sein, die auf ihrer dem Computer 5 zugewandten Seite als Stecker und auf ihrer von dem Computer 5 abgewandten Seite als Kupplung für den Anschlussstecker 6.2 der Tastatur 6 ausgebildet ist und außerdem einen Anschluss für das Versorgungskabel 2.3 aufweist.

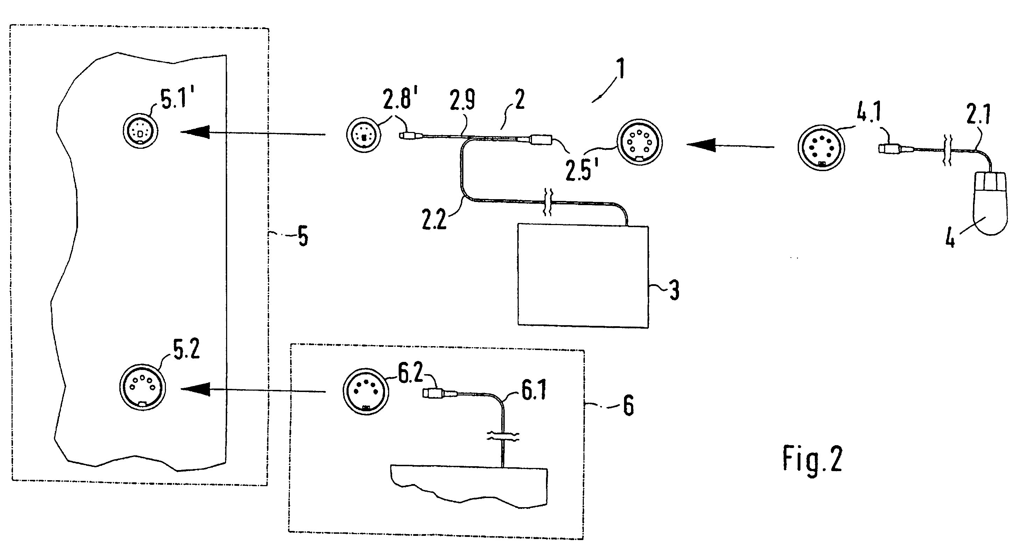

Während die Fig. 1 eine Kabelanordnung 2 insbesondere für ein COM-Port eines Computers 5 zeigt, ist in Fig. 2 eine Kabelanordnung 2 zum Anschluss an einem PS/2-Port eines Computers 5 wiedergegeben. Bei diesem Ausführungsbeispiel arbeitet die Bedieneinheit 1 entsprechend der Bedieneinheit 1 des ersten Ausführungsbeispiels. Die Versorgungsspannung wird dabei jedoch von dem mit einer Rundbuchse versehenen Bedieneinheit-Eingang 5.1' bereitgestellt. An die runde Buchse des Bedieneinheit-Eingangs 5.1' ist ein entsprechender Bedieneinheit-Stecker 2.8' der Kabelanordnung 2 ankoppelbar. Da die runde Buchse des Bedieneinheit-Eingangs 5.1' und der entsprechende Bedieneinheit-Stecker 2.8' relativ geringe Querschnittsabmessungen besitzen, ist das Tableau-Kabel 2.2 mit der Maus-Buchse 2.5' verbunden. Zwischen der Maus-Buchse 2.5' und dem Bedieneinheit-Stecker 2.8' ist ein Übergangskabel 2.9 vorgesehen, über das die Signale von und zu der Maus 4, sowie von und zu dem Tableau 3 und auch die Versorgungsspannung zumindest für das Tableau 3 geführt werden.

Die Bedieneinheit 1 mit der gezeigten Kabelanordnung 2 ist nicht nur vom Aufbau her einfach, sondern auch einfach in der Handhabung und auch von einem ungeübten Benutzer leicht an dem Computer 5 anschließbar.

## Patentansprüche

1. Bedieneinheit (1) mit einer Maus (4) und einem mit dieser in elektrischer Wirkverbindung stehenden Tableau (3) und mit einer Kabelanordnung (2) zum Anschluss an einem Bedieneinheit-Eingang (5.1) eines Computers (5), wobei die Maus (4) über ein einziges Maus-Kabel (2.1) und das Tableau (3) über ein einziges Tableau-Kabel (2.2) an ein gemeinsames Anschlusselement (2.8) angeschlossen sind, wobei das Maus-Kabel (2.1) und das Tableau-Kabel (2.2) zum Leiten elektrischer Signale dienen,
**dadurch gekennzeichnet,**
**dass** zumindest das Tableau-Kabel (2.2) zusätzlich zur Spannungsversorgung dient,
**dass** das Maus-Kabel (2.1) und das Tableau-Kabel (2.2) zusammen über das gemeinsame Anschlusselement (2.8) direkt mit dem Bedieneinheit-Eingang (5.1) des Computers (5) verbindbar sind,
**dass** die Spannungsversorgung über ein zu dem Anschlusselement (2.8) führendes zusätzliches Versorgungskabel (2.3), das mit einem Tastatureingang (5.2) verbindbar ist, erfolgt,
**dass** das Tableau-Kabel (2.2) über eine Kabeldurchführung gedichtet in das Tableaugehäuse eingeführt und im Inneren des Tableaugehäuses angeschlossen ist,
**dass** das Maus-Kabel (2.1) mittels einer Stecker/Kupplungs-Einheit (2.5/4.1) in zwei trennbare Abschnitte unterteilt ist und
**dass** das Anschlusselement (2.8), der an dieses anschließende Abschnitt des Maus-Kabels (2.1) mit dem zugehörigen Teil der Stecker/Kupplungs-Einheit (2.5/4.1), das Tableau-Kabel (2.2), das Tableau (3), das Versorgungskabel (2.3) und der Kabelabschnitt (2.4) mit dem Stecker (2.6) und der Kupplung (2.7) eine fest miteinander verbundene Einheit bilden.

2. Bedieneinheit (1) mit einer Maus (4), einem Tableau (3) und mit einer Kabelanordnung (2) zum Anschluss an einem Bedieneinheit-Eingang (5.1') eines Computers (5), wobei die Maus (4) über ein einziges Maus-Kabel (2.1) und das Tableau (3) über ein einziges Tableau-Kabel (2.2) an ein gemeinsames Anschlusselement (2.5') angeschlossen sind, wobei das Maus-Kabel (2.1) und das Tableau-Kabel (2.2) zum Leiten elektrischer Signale dienen,
**dadurch gekennzeichnet,**
**dass** die Maus (4) und das Tableau (3) in elektrischer Wirkverbindung stehen,
**dass** zumindest das Tableau-Kabel (2.2) zusätzlich zur Spannungsversorgung dient,
**dass** das Maus-Kabel (2.1) und das Tableau-Kabel (2.2) zusammen über das von einer Mausbuchse gebildete gemeinsame Anschlusselement (2.5') über ein an diesem einerseits angeschlossenes zusätzliches Übergangskabel (2.9) und ein daran andererseits angeschlossenes Verbindungselement (2.8') mit dem Bedieneinheit-Eingang (5.1') des Computers (5) steckbar verbindbar sind, wobei das Maus-Kabel (2.1) mit einem Maus-Stecker (4.1) in das Anschlusselement (2.5') einsteckbar ist, dass die Spannungsversorgung unmittelbar vom Bedieneinheit-Eingang (5.1') aus erfolgt,
**dass** nur das Anschlusselement (2.5'), das Übergangskabel (2.9), das Verbindungselement (2.8'), das Tableau-Kabel (2.2) und das Tableau (3) eine fest miteinander verbundene Einheit bilden und
**dass** das Tableau-Kabel (2.2) über eine Kabeldurchführung gedichtet in das Tableau-Gehäuse eingeführt und im Inneren des Tableau-Gehäuses angeschlossen ist.

3. Bedieneinheit nach Anspruch 1,
**dadurch gekennzeichnet,**
**dass** das Versorgungskabel (2.3) mit einem Zwischenstück (2.4, 2.6, 2.7) zwischen dem Tastatureingang (5.2) des Computers (5) und einem Anschlussstück (6.2) eines Anschlusskabels (6.1) der Tastatur (6) verbunden ist und
**dass** das Zwischenstück einen Kabelabschnitt (2.4) aufweist, der auf seiner einen Seite mit einem Stecker (2.6) und auf seiner anderen Seite mit einer Kupplung (2.7) versehen ist, oder als eine Stecker/Kupplungs-Gehäuseeinheit ausgebildet ist, in der eine Kabelanschlussstelle für das Versorgungskabel (2.3) vorgesehen ist.

4. Bedieneinheit nach Anspruch 1 oder 3,
**dadurch gekennzeichnet,**
**dass** das Anschlusselement (2.8) bei direkter Verbindbarkeit mit dem Computer (5) eine Trapez-Buchse oder ein Trapezstecker ist.

## Claims

1. Control unit (1), having a mouse (4) and an indicator board (3), which is in electrical operative connection with said mouse, and a cable arrangement (2) for communicating with a control unit input (5.1) of a computer (5), the mouse (4) communicating with a common connection element (2.8) via a single mouse cable (2.1), and the indicator board (3) communicating with said common connection element via a single indicator board cable (2.2), the mouse cable (2.1) and the indicator board cable (2.2) serving to conduct electrical signals, **characterised**
**in that** at least the indicator board cable (2.2) additionally serves to supply power,
**in that** the mouse cable (2.1) and the indicator board cable (2.2) are together directly connectable to the control unit input (5.1) of the computer (5) via the common connection element (2.8),
**in that** the power is supplied via an additional supply cable (2.3), which extends to the connection element (2.8) and is connectable to a keyboard input (5.2),
**in that** the indicator board cable (2.2) is introduced into the indicator board housing in a sealed manner via a cable duct and communicates with the interior of the indicator board housing,
**in that** the mouse cable (2.1) is divided into two separable portions by means of a plug/coupling unit (2.5/4.1), and
**in that** the connection element (2.8), the portion of the mouse cable (2.1) communicating with said element and provided with the associated part of the plug/coupling unit (2.5/4.1), the indicator board cable (2.2), the indicator board (3), the supply cable (2.3) and the cable portion (2.4) form a securedly interconnected unit with the plug (2.6) and the coupling (2.7).

2. Control unit (1), having a mouse (4), an indicator board (3) and a cable arrangement (2) for communicating with a control unit input (5.1') of a computer (5), the mouse (4) communicating with a common connection element (2.5') via a single mouse cable (2.1), and the indicator board (3) communicating with said common connection element via a single indicator board cable (2.2), the mouse cable (2.1) and the indicator board cable (2.2) serving to conduct electrical signals, **characterised**
**in that** the mouse (4) and the indicator board (3) are in electrical operative connection,
**in that** at least the indicator board cable (2.2) additionally serves to supply power,
**in that** the mouse cable (2.1) and the indicator board cable (2.2) are connectable in a plug-in manner to the control unit input (5.1') of the computer (5) via the common connection element (2.5'), which is formed by a mouse socket, via an additional transition cable (2.9), which communicates with said element at one end, and via a connecting element (2.8'), which communicates with said cable at the other end, the mouse cable (2.1) being insertable into the connection element (2.5') with a mouse plug (4.1),
**in that** the power is supplied directly from the control unit input (5.1'),
**in that** only the connection element (2.5'), the transition cable (2.9), the connecting element (2.8'), the indicator board cable (2.2) and the indicator board (3) form a securedly interconnected unit, and
**in that** the indicator board cable (2.2) is introduced into the indicator board housing in a sealed manner via a cable duct and communicates with the interior of the indicator board housing.

3. Control unit according to claim 1, **characterised**
**in that** the supply cable (2.3) is connected to an intermediate piece (2.4, 2.6, 2.7) between the keyboard input (5.2) of the computer (5) and a connection piece (6.2) of a connection cable (6.1) of the keyboard (6), and
**in that** the intermediate piece has a cable portion (2.4), which is provided with a plug (2.6) on one of its sides and with a coupling (2.7) on its other side, or it is in the form of a plug/coupling housing unit, in which a connection point for the supply cable (2.3) is provided.

4. Control unit according to claim 1 or 3, **characterised in that** the connection element (2.8) is a trapezoidal socket or a trapezoidal plug with direct connectability to the computer (5).

## Revendications

1. Unité de commande (1) pourvue d'une souris (4) et d'un tableau (3) faisant l'objet d'une liaison électrique active avec celle-ci et d'un ensemble de câbles (2) pour le raccordement à une entrée d'unité de commande (5.1) d'un ordinateur (5), la souris (4) étant reliée par un seul câble de souris (2.1) et le tableau (3) par un seul câble de tableau (2.2) à un élément de raccordement commun (2.8) et le câble de souris (2.1) et le câble de tableau (2.2) servant à véhiculer des signaux électriques, **caractérisée en ce qu'**au moins le câble de tableau (2.2) sert en supplément à l'alimentation en tension, **en ce que** le câble de souris (2.1) et le câble de tableau (2.2) peuvent ensemble être reliés directement avec l'entrée de l'unité de commande (5.1) de l'ordinateur (5) par l'intermédiaire de l'élément de raccordement commun (2.8), **en ce que** l'alimentation en tension a lieu par l'intermédiaire d'un câble d'alimentation supplémentaire (2.3) conduisant à l'élément de raccordement (2.8) et qui peut être relié avec une entrée de clavier (5.2), **en ce que** le câble de tableau (2.2) est introduit par l'intermédiaire d'un passage de câble étanche dans le boîtier du tableau et est branché à l'intérieur du boîtier du tableau, **en ce que** le câble de souris (2.1) est divisé par l'intermédiaire d'une unité de couplage à connecteurs (2.5/4.1) en deux sections séparables et **en ce que** l'élément de raccordement (2.8), la section du câble de souris (2.1) se raccordant à celui-ci avec la partie correspondante de l'unité de couplage à connecteurs (2.5/4.1), le câble de tableau (2.2), le tableau (3), le câble d'alimentation (2.3) et la section de câble (2.4) avec le connecteur (2.6) et l'élément d'accouplement (2.7) constituent une unité dont les éléments sont fermement reliés entre eux.

2. Unité de commande (1) pourvue d'une souris (4), d'un tableau (3) et d'un ensemble de câbles (2) pour le raccordement à une entrée d'unité de commande (5.1') d'un ordinateur (5), la souris (4) étant reliée par un seul câble de souris (2.1) et le tableau (3) par un seul câble de tableau (2.2) à un élément de raccordement commun (2.5') et le câble de souris (2.1) et le câble de tableau (2.2) servant à véhiculer des signaux électriques, **caractérisée en ce que** la souris (4) et le tableau (3) font l'objet d'une liaison électrique active, **en ce qu'**au moins le câble de tableau (2.2) sert en supplément à l'alimentation en tension, **en ce que** le câble de souris (2.1) et le câble de tableau (2.2) peuvent ensemble, par l'intermédiaire de l'élément de raccordement commun (2.5') formé par une prise femelle de souris et par l'intermédiaire d'un câble de jonction supplémentaire (2.9) raccordé d'un côté sur celui-ci et d'un élément de liaison (2.8') qui y est raccordé de l'autre côté, faire l'objet d'une liaison par enfichage avec l'entrée de l'unité de commande (5.1') de l'ordinateur (5), le câble de souris (2.1) pouvant être enfiché par l'intermédiaire d'un connecteur de souris (4.1) dans l'élément de raccordement (2.5'), **en ce que** l'alimentation en tension a lieu directement à partir de l'entrée de l'unité de commande (5.1'), **en ce que** seuls l'élément de raccordement (2.5'), le câble de jonction (2.9), l'élément de liaison (2.8'), le câble de tableau (2.2) et le tableau (3) constituent une unité dont les éléments sont reliés fermement entre eux et **en ce que** le câble de tableau (2.2) est introduit par l'intermédiaire d'un passage de câble étanche dans le boîtier du tableau et est branché à l'intérieur du boîtier du tableau.

3. Unité de commande selon la revendication 1, **caractérisée en ce que** le câble d'alimentation (2.3) est relié avec un élément intermédiaire (2.4, 2.6, 2.7) situé entre l'entrée de clavier (5.2) de l'ordinateur (5) et un élément de raccordement (6.2) d'un câble de raccordement (6.1) du clavier (6) et **en ce que** l'élément intermédiaire comprend une section de câble (2.4) qui est munie sur l'un de ses côtés d'un connecteur (2.6) et sur son autre côté d'un élément d'accouplement (2.7) ou **en ce qu'**il est configuré comme une unité de boîtier comprenant le connecteur et l'élément d'accouplement et dans laquelle est prévu un point de raccordement pour le câble d'alimentation (2.3).

4. Unité de commande selon la revendication 1 ou 3, **caractérisée en ce que**, s'il peut être relié directement avec l'ordinateur (5), l'élément de raccordement (2.8) est une prise femelle de forme trapézoïdale ou un connecteur de forme trapézoïdale.
